# EUROPEAN PATENT SPECIFICATION

(11) **EP 4 414 702 B1**
(45) Date of publication and mention of the grant of the patent: **15.07.2026**
(21) Application number: 24152028.7
(22) Date of filing: 16.01.2024
(51) Int. Cl.: G01N 30/34, B01D 15/36, G01N 30/96

(54) **ELECTROLYTIC ELUENT GENERATORS**
ELEKTROLYTISCHE ELUENT-GENERATOREN
GÉNÉRATEURS D'ELUANT ÉLECTROLYTIQUES

(30) Priority: 13.02.2023 US 202318167979
(43) Date of publication of application: 14.08.2024
(73) Proprietor: Dionex Corporation, Sunnyvale, CA 94085 (US)
(72) Inventor: CHEN, Yongling, Santa Clara (US); LIU, Yan, Palo Alto (US)
(74) Representative: Boult Wade Tennant LLP

(56) References cited:
- CHEN YONGJING ET AL: "pH- and Concentration-Programmable Electrodialytic Buffer Generator", vol. 84, no. 1, 12 December 2011 (2011-12-12), US, pages 59 - 66, XP093171658, ISSN: 0003-2700, Retrieved from the Internet <URL:https://pubs.acs.org/doi/pdf/10.1021/ac2023734> [retrieved on 20240606], DOI: 10.1021/ac2023734
- YANG B ET AL: "A multifunctional dual membrane electrodialytic eluent generator for capillary ion chromatography", JOURNAL OF CHROMATOGRAPHY A, ELSEVIER, AMSTERDAM, NL, vol. 1216, no. 12, 20 March 2009 (2009-03-20), pages 2412 - 2416, XP025990479, ISSN: 0021-9673, [retrieved on 20090115], DOI: 10.1016/J.CHROMA.2009.01.025
- LU YIFEI ET AL: "A two-membrane electrodialytic carbonate eluent generator for ion chromatography", vol. 1622, 20 April 2020 (2020-04-20), AMSTERDAM, NL, pages 461095, XP093171988, ISSN: 0021-9673, Retrieved from the Internet <URL:https://pdf.sciencedirectassets.com/271409/1-s2.0-S0021967320X0015X/1-s2.0-S0021967320303162/main.pdf?X-Amz-Security-Token=IQoJb3JpZ2luX2VjEGIaCXVzLWVhc3QtMSJHMEUCIEbN13OsbCXTbSXC3jgvUboPJDgtJQzcGme2k8VPyuqnAiEAiKO3zL3aOlNFnwWy+NKLY7/u0ZxTFglf62Qul72Wx9wqvAUI6///////////ARAFGgwwNTkwMDM1NDY4NjUiDH8K7> [retrieved on 20240606], DOI: 10.1016/j.chroma.2020.461095

## Description

The present invention relates to electrolytic eluent generator systems and their use in chromatography, in particular ion chromatography.

### BACKGROUND

Ion chromatography (IC) is a widely used analytical technique for the determination of anionic and cationic analytes in various sample matrices.

For example, the research on complex carbohydrates is of high importance in both the biotherapeutics (e.g. antibodies) and food science (e.g. prebiotics) areas.

The most commonly used analytical methods for analysis include hydrophilic interaction liquid chromatography (HILIC) with fluorescence detection (FLD), after labelling the oligosaccharides with a fluorophore, or with mass spectrometry (MS) detection, capillary electrophoresis (CE) with FLD, after labelling the oligosaccharides with a fluorophore, or with MS detection, and high-performance anion-exchange chromatography of native oligosaccharides with pulsed amperometric detection (HPAEPAD). Among these techniques, the HPAE-PAD technique offers superior resolution of oligosaccharides and high sensitivity without the need for derivatization. HPAE achieves highly selective separations of oligosaccharides using a strong anion-exchange stationary phase under high-pH conditions using hydroxide-based eluents. However, hydroxide solutions are an excellent trap for atmospheric carbon dioxide (CO₂), which results in the eluent being contaminated with carbonate. To minimize the carbonate contamination, the electrolytic eluent generation technology has been widely used to produces ultrapure hydroxide eluents on demand for ion chromatography (IC).

There is therefore a general need for a convenient source of high purity acid or base for use as an eluent for liquid chromatography and, particularly, for ion chromatography.

In one technique, described in U.S. Pat. No. 5,045,204, an impure acid or base is purified in an eluent generator while flowing through a source channel along a permselective ion exchange membrane which separates the source channel from a product channel. The membrane allows selective passage of cations or anions. An electrical potential is applied between the source channel and the product channel so that the anions or cations of the acid or base pass from the former to the latter to generate therein a base or acid with electrolytically generated hydroxide ions or hydronium ions, respectively. This system requires an aqueous stream of acid or base as a starting source or reservoir.

US6,225,129 describes methods and apparatus to generating an acid or base for chromatographic use. For generating a base the method includes the steps of providing a cation source in a cation source reservoir, flowing an aqueous liquid stream through a base generation chamber separated from the cation source reservoir by a barrier (e.g. a charged membrane) substantially preventing liquid flow while providing a cation transport bridge, applying an electric potential between an anode cation source reservoir and a cathode in the base generation chamber to electrolytically generate hydroxide ions therein and to cause cations in the cation source reservoir to electromigrate and to be transported across the barrier toward the cathode to combine with the transported cations to form cation hydroxide, and removing the cation hydroxide in an aqueous liquid stream as an effluent from the first base generation chamber. Suitable cation sources include a salt solution, a cation hydroxide solution or cation exchange resin.

US9,624,588 describes a system and method to generate a concentration gradient eluent flow are described. The concentration gradient eluent flow can include at least two different generants. A liquid can be pumped to an eluent generating device. A first controlling signal can be applied to a first eluent generator to generate a first generant. A second controlling signal can be applied to a second eluent generator to generate a second generant. Either the first and/or the second controlling signal can be varied as a function of time to generate the concentration gradient eluent flow.

The paper of Chen Yongjing et al. "pH- and Concentration-Programmable Electrodialytic Buffer Generator", Analytical Chemistr vol. 84, no. 1, pages 59-66 discloses a three-electrode electrodialytic buffer generator for ion chromatography, comprising a central flow-through channel separated from two outer compartments by a cation-exchange membrane (CEM) and an anion-exchange membrane (AEM), each with independent electrodes and current control.

Electrolytically generated eluents avoid some of the problems associated with manually prepared eluents, such as operator error and the introduction of contaminants. For example, the preparation of carbonate free NaOH eluents is difficult because carbonate can be introduced as an impurity from the reagents or by the adsorption of carbon dioxide from the air.

However, the system used to electrolytically generate the eluents can be complex with multiple components required. There can also be a delay between the eluent cartridges resulting in suboptimal gradient profiles and poor separation. Gas generation can also cause system issues.

It is an object of the invention to provide an improved electrolytic eluent generating devices and methods that avoid at least some of the above-mentioned problems.

### SUMMARY OF THE INVENTION

According to the present invention, there is provided an electrolytic eluent generator system according to claim 1.

This shall hereinafter be referred to as the "system", "the generator system" or "generator" of the invention.

In the generator of the invention, the first and second ion exchange connectors may connect the first and second reservoirs to a single flow-through eluent generation zone in electrical communication to the first electrode or one or more, such as two, flow-through eluent generation zones that are all in electrical communication with the first electrode and are in fluid communication with each other.

As used herein, where a reservoir or flow-through eluent generation zone is said to comprise an electrode, this is intended to encompass situations where the reservoir and/or flow-through eluent generation zone is in electrical communication with said electrode.

The generator can be used to supply the generated eluent to a chromatography system or other analytical system which uses such an eluent.

The present invention also provides a method of generating a salt solution for liquid chromatography according to claim 10.

This shall hereinafter be referred to as the method of the invention.

In an aspect of the method of the invention, the first and second reservoirs are within a single chamber/cartridge (160).

### BRIEF DESCRIPTION OF THE DRAWINGS

Fig. 1 - Block diagram of a prior art eluent generator.
Fig 2 - Block diagram of an embodiment of the generator system of the invention.
Fig 3 - Block diagram of a further embodiment of the generator system of the invention utilising a pH modifier.
Fig. 4 - Schematics of the experimental setup using the dual EGC cartridge setup (prior art) in Example 1
Fig. 5 - Schematics of the experimental setup using the dual EGC cartridge with a common grounded electrode (simulating three-electrode EGC design) setup in Example 1.
Fig. 6 - (A) Chromatogram of alpha-(2,6)-NAN-lactose (peak 1) and alpha-(2,3)-NAN-lactose (peak 2) obtained by old and new configurations. (B) The EGC 400 MSA current measured by Fluke 289 multimeters on old and new configurations. (C) The EGC 400 KOH current measured by Fluke 289 multimeters on old and new configurations.
Fig. 7 - Schematics of the experimental setup using the dual EGC cartridge with a common grounded electrode (simulating three-electrode EGC design) setup in Example 2.

### DETAILED DESCRIPTION OF PREFERRED EMBODIMENTS

This invention relates to a generator and method for generating high purity solutions of salts or acids or bases for use as chromatographic eluents.

The generator system and method of the invention will be defined in more detail by reference to the Figures. The Figures, which are not necessarily to scale, depict selected embodiments and are not intended to limit the scope of the invention. The detailed description illustrates, by way of example, not by way of limitation, the principles of the invention. The description will clearly enable one skilled in the art to make and use the invention, and described several embodiments, adaptions, variations, alternatives and uses of the invention. As used herein, the terms "about" or "approximately" for any numerical values or ranges indicate a suitable dimensional tolerance that allows the part or collection of components to functions for its intended purpose as described.

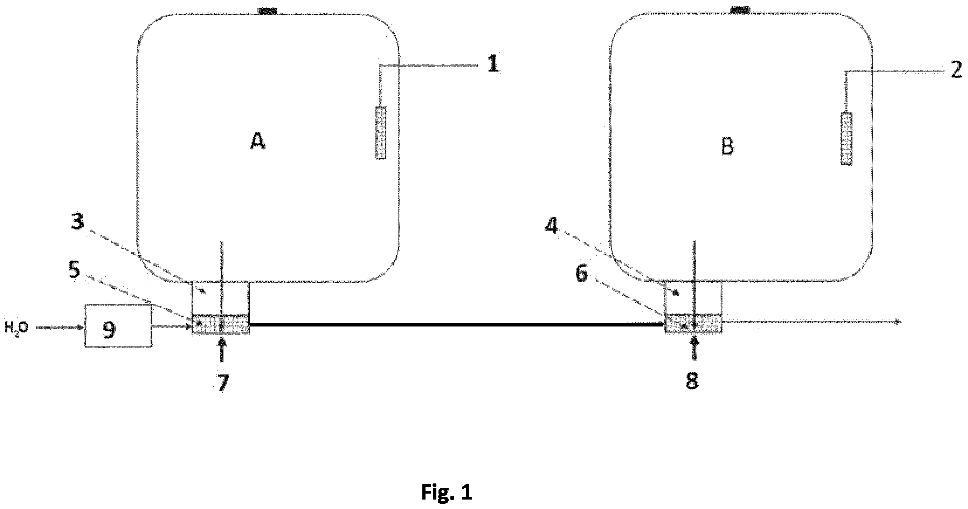

Figure 1 shows a block diagram of a prior art eluent generator. The prior art generator comprises reservoirs (A) and (B) containing a source of ion electrolyte. As shown, reservoir A comprises a cathode (1) and reservoir B comprises an anode (2). In this example, disposed between reservoir A and eluent generation zone (5) is an anion exchange connector (3). Disposed between reservoir B and eluent generation zone (6) is a cation exchange connector (4). In electrical communication with zone (5) is an anode (7) and in electrical communication with zone (6) is a cathode (8). Pump (9) is positioned before zone (5) to maintain the flow of aqueous fluid through the zones.

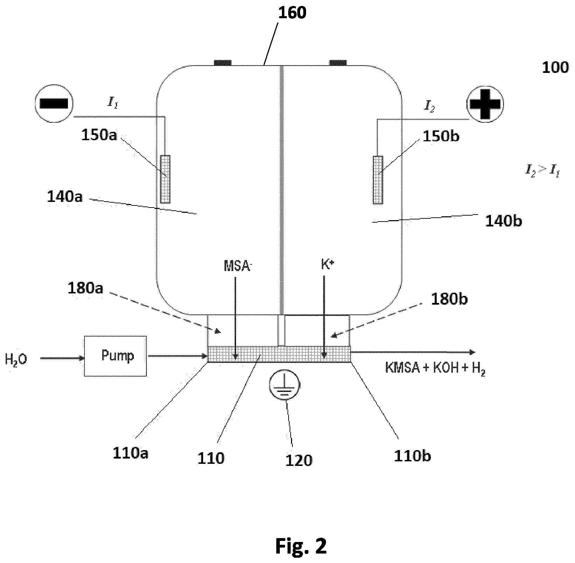

Referring to Figure 2, a block diagram of an embodiment of the generator system of the invention is illustrated. It will be described hereafter with respect to the generation of a KMSA/KOH eluent. However, it will be appreciated that other eluents may be generated depending on the source of ion electrolyte used.

As defined above and shown in Figure 2, the generator of the invention comprises a first (140a) and second (140b) reservoir within a single cartridge (160) utilising the three-electrode configuration. Each reservoir may typically have a gas vent located at the top of the reservoir.

The reservoirs are configured to hold a source of ion electrolyte. That is, during use, the reservoirs will contain a source of ion electrolyte as discussed in more detail below.

The reservoirs act as low-pressure electrolyte storage and are both separately indirectly in contact with at least one flow-through eluent generation zone (110), where the eluent generation zone is typically under high-pressure.

The at least one flow-through eluent generation zone comprises an inlet (110a) and an outlet (110b). Where more than one flow-through eluent generation zone is present, such as two generation zones, each zone may have its own inlet and outlet.

The at least one flow-through generation comprises/is in electrical communication with a first electrode. Where more than one flow-through generation zone is present, such as two generation zones, each zone is connected to the first electrode, such that three electrodes are present in the generator of the invention.

The reservoirs are indirectly in contact with the at least one flow-through eluent generation zone due to the presence of ion exchange connectors (180a, 180b) positioned between each reservoir and the flow-through eluent generation zone (110).

Disposed between the first reservoir and the at least one flow-through eluent generation zone is a first ion exchange connector (180a). This may be a cation or anion exchange connector depending on the electrolyte present in the attached first reservoir.

Disposed between the second reservoir and the at least one flow-through eluent generation zone is a second ion exchange connector (180b). This may be an anion or cation exchange connector depending on the electrolyte present in the attached second reservoir.

As used herein, the terms "cation" and "anion" exclude the hydrogen and hydroxide ions produced during the electrolysis of water.

The reservoirs and ion exchange connectors are typically situated on the same side of the eluent generation zone.

The ion exchange connectors (180a, 180b) may typically be in the form of a charged perm-selective membrane, such as that described in US6,225,129. A suitable form of membrane is supplied by Membrane International of Glenrock, N.J. (designated CMI-7000 cation exchange membrane).

The ion exchange connectors (180a, 180b) should be of sufficient thickness to withstand the pressures in the at least one flow-through eluent generation zone. For example, if the at least one flow-through eluent generation zone is on-line with a chromatography system, such pressures may be on the order of 1,000 to 5,000 psi.

When using a membrane as the ion exchange connector(s), it is suitably configured of circular cross-section within a cylindrical external short column. Typical dimensions for the membrane are about 4-6 mm diameter and 1-3 mm in length. The barrier can be fabricated by stacking multiple disks of cation membranes together within the cylindrical column.

Alternatively, the ion exchange connector(s) can be prepared from a single ion exchange membrane of appropriate thickness or a block or rod of appropriate ion exchange material which permits passage of the ions of the opposite charge on the ion exchange connector(s) but not of the liquid.

The first ion exchange connector may be an anion exchange connector and the second ion exchange connector may be a cation exchange connector or vice versa.

The ion exchange connector typically includes exchange about ions and is capable of passing ions of a specific charge. For example, where the ion exchange connector is a cation exchange connector, the connector is capable of passing cations but not anions, with the opposite applying for where the ion exchange connector is an anion exchange connector.

As noted above, both ion exchange connectors block bulk liquid flow; that is, they block liquid flow except for possible insignificant leakage. Although ion exchange connectors using a membrane are preferred, other connectors which accomplish the above functions could be used. This is however not claimed.

One function of the ion exchange connector(s) is to permit use of very large reservoir(s) (e.g. 1-2 litres) supplying anions or cations to the at least one flow-through eluent generation zone. The large capacity reservoir permits a long term supply of anions and/or cations. By way of example, a typical KOH generation chamber may have a volume on the order of less than 100 .mu.L and more typically from 100 .mu.L to 1 ,000 .mu.L. Suitable dimensions for a cylindrical shape are 4-7 mm ID and 10-50 mm in length. This facilitates use on-line in a chromatography system. In contrast, the reservoirs used in the generator of the invention may be many times larger. For example, the ratio between the reservoir(s) (140a and/or 140b) and the at least one flow-through eluent generation zone may be at least 5:1 to 10:1 or 20:1 or even higher.

Another function of the ion exchange connector(s) is that it provides a high pressure physical barrier that insulates the relatively low pressure supply reservoir(s) (140a and/or 140b) from the at least one flow-through eluent generation zone, which is of substantially high pressure when it is on line with a high pressure chromatography system.

For example, even a very low-pressure chromatography system would be pressurized to at least about 50 psi. Assuming the reservoir's atmospheric pressure (14.7 psi) the pressure maintained in the at least one flow-through eluent generation zone is at least about three times the pressure maintained in the reservoirs. This isolation is particularly useful when that pressure ratio is at least about 2:1 and is even more so when the ratio is much higher, for example at least about 5:1 to at least about 10:1 to 100:1 or higher.

Because it is operated under low pressure, a large anion and/or cation supply column can be prepared and operated safely without demanding pressure constraint. The first and second reservoirs respectively comprise a second and third electrode. The electrodes present in the reservoirs and eluent generation zone are typically electrodes comprised of a Nobel metal, such as platinum wire, to perform electrolysis. As used in the generator of the invention, the electrodes may comprise the same Nobel metal in the same form, i.e. platinum wire, or each electrode may comprise different Nobel metals in a different form, such as flat-bed electrodes.

In the generator of the invention, the first electrode may be grounded. Alternatively, the second and/or third electrodes may be grounded.

To provide a space saving, the first and second reservoirs may be contained within a single chamber/cartridge/holder (160). Due to the use of the three electrode configuration, this can be achieved relatively simply.

A first current source is configured to be connected to said first (120) and second electrodes (150a); and a second current source configured to be connected to said first (120) and third electrodes (150b).

During use, the generator of the invention may further comprise:
(h) A source of first ion electrolyte in fluid communication with the first ion (anion) exchange connector (180a); and
(i) A source of second ion electrolyte in fluid communication with the second ion (cation) exchange connector (180b), wherein the second ions are of opposite charge to said first ions; and/or
(j) A source of deionized water in fluid communication with the inlet of the eluent generating zone.

The first ion electrolyte may be present in the first reservoir and the second ion electrolyte may be present in the second reservoir. Alternatively, the opposite configuration may be used.

In the generator of the invention, the first ion electrolyte may be methane sulfonic acid and the second ion electrolyte may be potassium hydroxide, sodium hydroxide, lithium hydroxide, potassium carbonate, sodium carbonate or vice versa.

Deionised water is pumped through the eluent generation zone via the inlet (180a) and outlet (180b).

A current (dc current) passes from a first current or power source (not shown) between the first electrode (120) and second electrode (150a) and from a second current or power source (not shown) between the first electrode (120) and the third electrode (150b).

Under the applied electrical field, electrolysis of the deionized water takes place at the first electrode (120) in the eluent generation zone: H₂O → 2H⁺+1/2 O₂ + 2e⁻ or 2H₂O + 2e⁻ → 2OH⁻ + H₂, depending on the polarity of the electrode and the relative magnitude of the two currents.

The method of the invention will now be illustrated using KMSA/KOH eluent as an example eluent.

The first reservoir contains methanesulfonate electrolyte. Methanesulfonic acid anion passes through the first ion exchange connector, which in this case is an anion exchange connector into the eluent generation zone under the influence of the current generated between the first and second electrodes.

The second reservoir contains potassium electrolyte. Potassium cation passes through the second ion exchange connector, which in this case is a cation exchange connector into the eluent generation zone under the influence of the current generated between the first and third electrodes.

The concentrations of generated MSA and KOH are determined by the currents applied to the circuit between the first and second electrodes and the first and third electrodes and the flow rate though the eluent generation zone(s).

Since the generation of hydroxide is critical for both separation and detection, the concentration of the generated KOH may typically set to be higher than that of the generated MSA, resulting in a final product containing KMSA and KOH eluents at the desired concentrations.

In the at least one flow-through eluent generation zone, KMSA, KOH and hydrogen gas are generated and exit the generation zone via the outlet (180b).

In the generator of the invention, a pump and/or degasser may be included. Typically, the pump would be connected to the eluent generation zone inlet and the degasser to the eluent generation zone outlet.

The degassed eluent may then be fed into a chromatography system as required or stored for later use.

In the generator system, the use of the three electrode configuration in combination with a single flow-through eluent generation zone and/or an integrated(single cartridge) provides several advantages, including reducing the number of components and connections (resulting in an ease of use), a reduction in the gap between the ion electrolyte sources and reduction in gas generation.

In an aspect of the generator of the invention, the generator may further comprise a pH modification unit, such as an electrolytic pH modifier in fluid communication with the outlet of the eluent generation zone, said pH modifier comprising a pH modifier flow channel, a pH modifier barrier adjacent to said pH modifier flow channel substantially preventing liquid flow and transporting ions of one charge only and first and second spaced electrodes disposed on opposite sides of said pH modifier barrier.

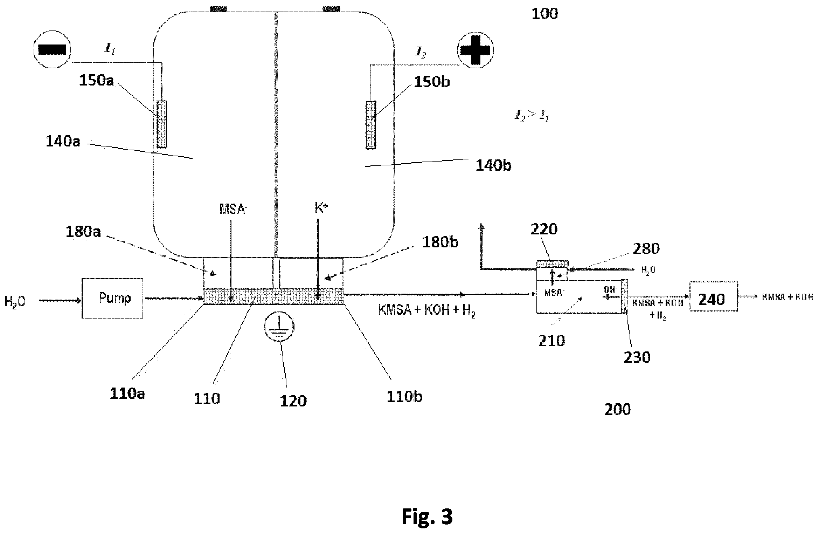

This embodiment is shown in Figure 3, where the generator system of Figure 2 is combined with a pH modifier (200). In this embodiment, the pH modifier comprises an anion exchange bed (210), anode (220), cathode (230) and anion exchange connector (280). The system as shown also includes a degasser (240).

In an alternative embodiment, the pH modifier may be a further source of ion electrolyte. For example, a further source of potassium electrolyte, which can provide a further source of potassium cations to the eluent stream expanding the potassium concentration limit of the eluent generation.

Where the pH modifier is a source of ion electrolyte, the pH modified may be in the form of a reservoir comprising an anode or cathode (depending on the electrolyte source), with a ion exchange connector disposed between the reservoir and a flow-through eluent generation zone. The source of ion electrolyte will determine the electrode in the reservoir, the ion exchange connector and the electrode in electrical communication with the flow-through eluent generation zone. For example, where the ion electrolyte is potassium electrolyte, the electrode in the reservoir will be an anode, and the electrode in electrical communication with the flow-through eluent generation zone will be a cathode. The electrode may comprise platinum as previously described above.

The pH modifier may be positioned before or after the degasser, although it may be preferred that the pH modifier is positioned before the degasser.

In an aspect of the invention, the generator of the invention may be used in the method of the invention as defined herein.

### Example 1

To demonstrate the feasibility of the three-electrode EGC configuration, the chromatographic performance of the original EGC-MSA in series of EGC-KOH configuration (2 pairs of electrodes) was compared to the that of the new configuration, where the anode of the EGC-MSA and the cathode of the EGC-KOH were connected and grounded to simulate the three electrode EGC configuration.

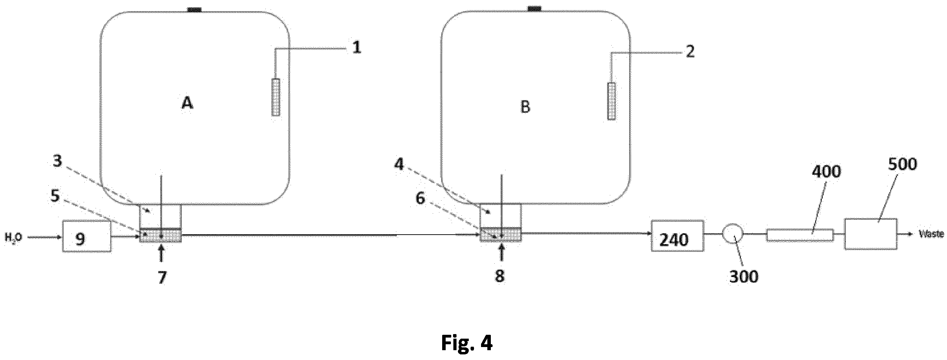

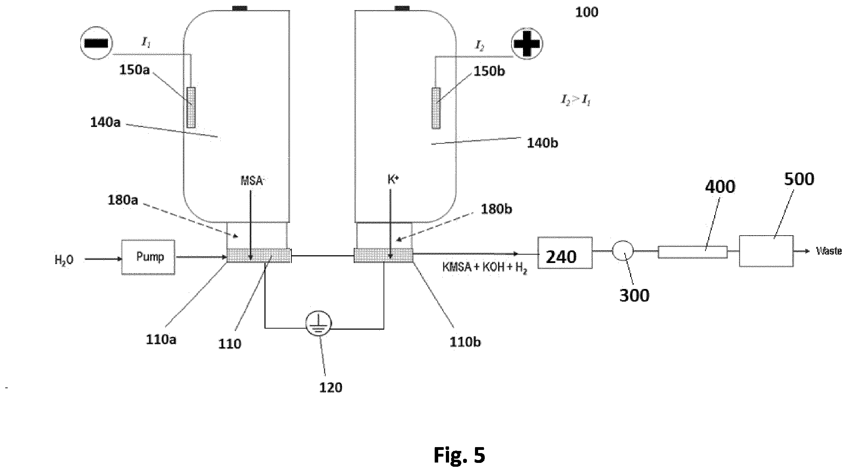

The experimental setup is shown in Figure 4, where the prior art generator of Figure 1 is connected to a degasser (240), injection value (300), column (400) and a pulsed amperometric detector (500). Deionised water is pumped first into the inlet of the EGC 400 MSA cartridge followed by the EGC 400 KOH cartridge. The effluent of the EGC 400 KOH cartridge is fed into the EG degasser to remove the H₂ gas. Then the degassed eluent carries the sample, which is introduced into the system from the injection valve, through the separation column, and detected by a pulsed amperometric detector (PAD). In Figure 5, the anode of the EGC 400 MSA cartridge and the cathode of the EGC-KOH are both grounded then tied together. Two Keithley programmable power supplies are used to apply constant current to the electrodes of the two EGC cartridges respectively. The two currents are monitored using two Fluke 289 true RMS multimeters respectively, as shown in Figures 4 and 5. The reading of the Fluke 289 multimeters are recorded via virtual channel in the Dionex Chromeleon software.

The experimental conditions are as follows,
IC system: Thermo Scientific Dionex ICS-6000
Eluent source: DI water
Eluent generators: EGC 400 MSA cartridge in series of EGC 400 KOH cartridge
Constant current source: Two Keithley 2200-20-5 programmable power supplies

Current settings:
For EGC 400 MSA cartridge: 0.0006 A
For EGC 400 MSA cartridge: 0.0121 A
Eluent concentration: 8 mM KMSA/150 mM KOH
Eluent flow rate: 0.05 mL/min
Column: prototype CarboPac PA210 (1 x 250 mm)
Detection: PAD, carbohydrate quadruple waveform, PTFE disposable electrode
Sample: alpha-(2,6)-NAN-lactose, alpha-(2,3)-NAN-lactose
Data collection software: Dionex Chromeleon 7

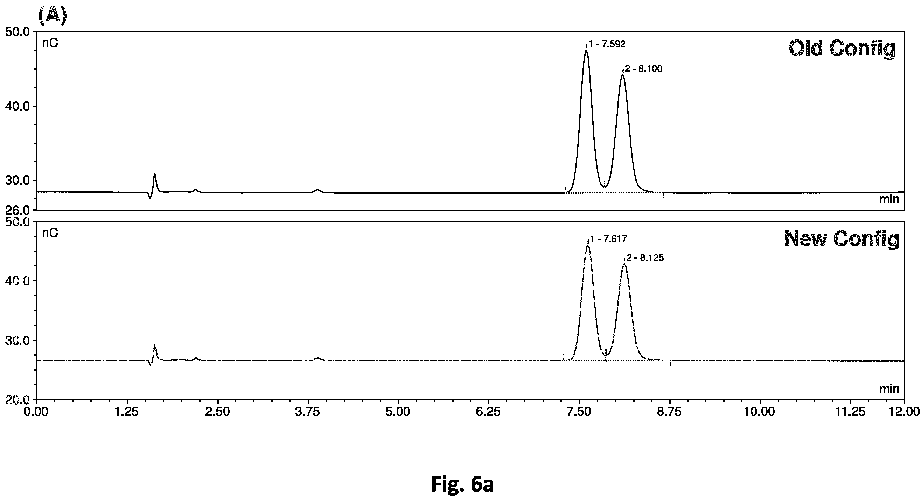

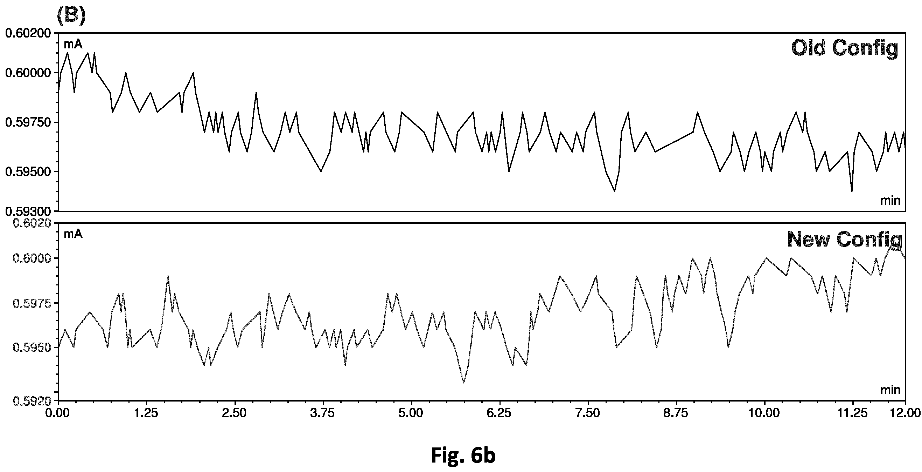

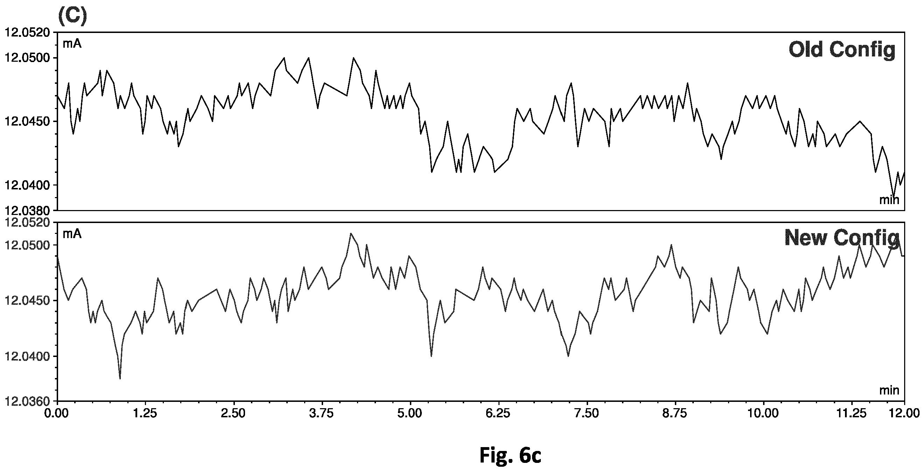

The chromatograms of alpha-(2,6)-NAN-lactose and alpha-(2,3)-NAN-lactose obtained by the configurations show in Figure 4 and Figure 5 are shown to be comparable (Figure 6a). The two currents measured by the Fluke 289 multimeters are shown to be comparable (EGC 400 MSA current in Figure 6b and EGC 400 KOH current in Figure 6c). The result indicates that the new configuration provides comparable performance as the old configuration.

### Example 2

With the new configuration, where the anode of the EGC-MSA and the cathode of the EGC-KOH are connected and grounded to simulate the three electrode EGC configuration, the gas generation was examined.

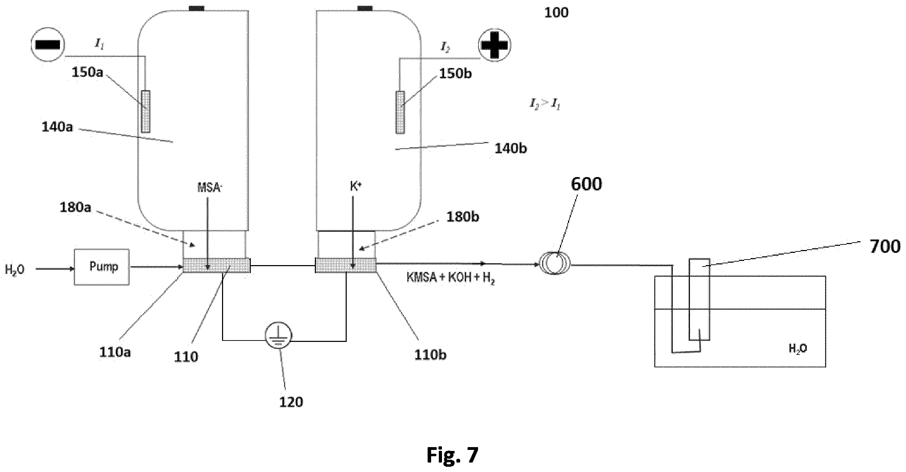

As shown in Figure 7, the outlet of the EGC 400 KOH is connected to a coil of restriction tubing (600). The tubing is inserted under an inverted 10-mL graduated cylinder (700) immersed in the water. The gas is collected in the water filled graduated cylinder. The collection time is 10 min.

The experimental conditions are as follows,
IC system: Thermo Scientific Dionex ICS-6000
Eluent source: DI water
Eluent generators: EGC 400 MSA cartridge in series of EGC 400 KOH cartridge
Constant current source: Two Keithley 2200-20-5 programmable power supplies
Current settings:
   For EGC 400 MSA cartridge: 0.008 A
   For EGC 400 MSA cartridge: 0.008 A
   Eluent concentration: 100 mM KMSA
   Eluent flow rate: 0.05 mL/min

The test shows that virtually no gas bubbles were generated when the two currents were set equal. A pH paper was used to test the pH of the effluent from restriction tubing, and the color indicated that the effluent was pH neutral. The result indicates that when the two currents are set equal, no gas is produced, and the generated eluent is potassium methanesulfonate salt.

## Claims

1. An electrolytic eluent generator system (100), wherein the generator system comprises:
(a) At least one flow-through eluent generation zone (110) comprising an inlet (110a) and an outlet (110b) and a first electrode (120),
(b) A first reservoir (140a) comprising a second electrode (150a) and configured to hold a first ion source;
(c) A second reservoir (140b) comprising a third electrode (150b) and configured to hold a second ion source;
(d) A first ion exchange connector (180a) disposed between the first reservoir and the eluent generation zone, wherein the connector substantially prevents liquid flow through the ion exchange connector and transports ions only of the same charge as said first ions;
(e) A second ion exchange connector (180b) disposed between the second reservoir and the eluent generation zone, wherein the connector substantially prevents liquid flow through the ion exchange connector and transports ions only of the same charge as said second ions, wherein the second ion exchange connector is of opposite charge to the first ion exchange connector, whereby first and second ion exchange connectors are in communication with the eluent generating channel allowing ions to pass through the ion exchange connectors to mix and form a salt-containing solution suitable for use as an eluent for liquid chromatography;
(f) A first current source configured to be connected to said first (120) and second electrodes (150a); and
(g) A second current source configured to be connected to said first (120) and third electrodes (150b);
wherein the first and second reservoirs are within a single chamber/cartridge (160); wherein the at least one flow-through eluent generation zone is configured to be on-line with a chromatography system;
wherein a pressure maintained in the at least one flow-through eluent generation zone is from 69 to 345 bar (1,000 to 5,000 psi), and a pressure maintained in the first and second reservoirs is at atmospheric pressure; and
wherein each ion exchange connector consists of a membrane having a thickness of from 1 to 3 mm.

2. The generator system according to claim 1, wherein either the first electrode is grounded; or the second and third electrodes are grounded.

3. The generator system according to claim 1 or 2, further comprising a pump and/or a degasser.

4. The generator system according to any one of the preceding claims, further comprising an electrolytic pH modifier in fluid communication with the outlet of the eluent generation zone, said pH modifier comprising a pH modifier flow channel, a pH modifier barrier adjacent to said pH modifier flow channel substantially preventing liquid flow and transporting ions of one charge only and first and second spaced electrodes disposed on opposite sides of said pH modifier barrier.

5. The generator system according to any one of the preceding claims, further comprising:
(h) A source of first ion electrolyte in fluid communication with the first ion exchange connector (180a); and
(i) A source of second ion electrolyte in fluid communication with the second ion exchange connector (180b), wherein the second ions are of opposite charge to said first ions; and/or
(j) A source of deionised water in fluid communication with the inlet of the eluent generation zone.

6. The generator system according to claim 5, wherein the source of first ion electrolyte is an aqueous anion electrolyte solution and the source of second ion electrolyte is an aqueous cation electrolyte solution.

7. The generator system according to claim 5, wherein the source of first ion electrolyte is an aqueous cation electrolyte solution and the source of second ion electrolyte is an aqueous anion electrolyte solution.

8. The generator system according to claim 6 or 7, wherein the aqueous anion electrolyte solution is methanesulfonate electrolyte and the aqueous cation electrolyte solution is potassium electrolyte.

9. The generator system according to any one of the preceding claims, wherein at least one of the first, second or third electrodes comprise platinum.

10. A method of generating a salt solution for liquid chromatography using an electrolytic eluent generator system comprising at least one flow-through eluent generation zone (110) comprising an inlet (110a) and an outlet (110b) and a first electrode (120); a first reservoir (140a) comprising a second electrode (150a) and a source of first ion electrolyte; a second reservoir (140b) comprising a third electrode (150b) and a source of second ion electrolyte; a first ion exchange connector (180a) disposed between the first ion source and the eluent generation zone, wherein the connector substantially prevents liquid flow through the ion exchange connector and transports ions only of the same charge as said first ions; a second ion exchange connector (180b) disposed between the second ion source and the eluent generation zone, wherein the connector substantially prevents liquid flow through the ion exchange connector and transports ions only of the same charge as said second ions, wherein the second ion exchange connector is of opposite charge to the first ion exchange connector, whereby first and second ion exchange connectors are in fluid communication with the eluent generating channel allowing ions to pass through the ion exchange connectors to mix and form a salt-containing solution suitable for use as an eluent for liquid chromatography; a first current source configured to be connected to said first (120) and second electrodes (150a); and a second current source configured to be connected to said first (120) and third electrodes (150b), wherein the method comprises the steps of:
(a) Flowing a source of deionised water into the at least one flow-through eluent generation zone;
(b) Passing a first current between the first and second electrode to cause ions to pass through the first ion exchange connector, in which the first current controls the amount of ions transported into or from the at least one flow-through eluent generation zone; and
(c) Passing a second current between the first and third electrodes to cause ions to pass through the second ion exchange connector, in which the second current controls the amount of ions transported into or from the at least one flow-through eluent generation zone, whereby a salt-containing solution suitable for use as an eluent for liquid chromatography is formed in the eluent generation zone;
wherein the first and second reservoirs are within a single chamber/cartridge (160); wherein the at least one flow-through eluent generation zone is configured to be on-line with a chromatography system;
wherein a pressure maintained in the at least one flow-through eluent generation zone is from 69 to 345 bar (1,000 to 5,000 psi), and a pressure maintained in the first and second reservoirs is at atmospheric pressure; and
wherein each ion exchange connector consists of a membrane having a thickness of from 1 to 3 mm.

11. The method of claim 10, wherein the source of first ion electrolyte is an aqueous anion electrolyte solution and the source of second ion electrolyte is an aqueous cation electrolyte solution.

12. The method of claim 10 or 11, wherein the aqueous anion electrolyte solution is methanesulfonate electrolyte and the aqueous cation electrolyte solution is potassium electrolyte.

13. The method according to any one of claims 10 to 12, wherein at least one of the first, second or third electrodes comprise platinum.

14. The method according to any one of claims 10 to 13, in which a difference between first current and the second current determines an amount of generated H⁺ or OH⁻.

15. The method according to any one of claims 10 to 14, wherein either the first electrode is grounded; or the second and third electrodes are grounded.

## Patentansprüche

1. Elektrolytisches Eluentenerzeugungssystem (100), wobei das Erzeugungssystem umfasst:
(a) mindestens eine Durchflusseluentenerzeugungszone (110), umfassend einen Einlass (110a) und einen Auslass (110b) und eine erste Elektrode (120),
(b) ein erstes Reservoir (140a), umfassend eine zweite Elektrode (150a) und konfiguriert, um eine erste Ionenquelle aufzunehmen;
(c) ein zweites Reservoir (140b), umfassend eine dritte Elektrode (150b) und konfiguriert, um eine zweite Ionenquelle aufzunehmen;
(d) einen ersten Ionenaustauschverbinder (180a), der zwischen dem ersten Reservoir und der Eluentenerzeugungszone angeordnet ist, wobei der Verbinder einen Flüssigkeitsfluss durch den Ionenaustauschverbinder im Wesentlichen verhindert und Ionen nur mit der gleichen Ladung wie die ersten Ionen transportiert;
(e) einen zweiten Ionenaustauschverbinder (180b), der zwischen dem zweiten Reservoir und der Eluentenerzeugungszone angeordnet ist, wobei der Verbinder den Flüssigkeitsfluss durch den Ionenaustauschverbinder im Wesentlichen verhindert und nur Ionen mit der gleichen Ladung wie die zweiten Ionen transportiert, wobei der zweite Ionenaustauschverbinder eine entgegengesetzte Ladung zu dem ersten Ionenaustauschverbinder hat, wodurch der erste und der zweite Ionenaustauschverbinder in Kommunikation mit dem Eluentenerzeugungskanal stehen, wobei Ionen ermöglicht wird, durch die Ionenaustauschverbinder zu treten, um sich zu mischen und eine salzhaltige Lösung zu bilden, die zur Verwendung als ein Eluent für Flüssigkeitschromatographie geeignet ist;
(f) eine erste Stromquelle, die konfiguriert ist, um mit der ersten (120) und der zweiten Elektrode (150a) verbunden zu werden; und
(g) eine zweite Stromquelle, die konfiguriert ist, um mit der ersten (120) und der dritten Elektrode (150b) verbunden zu werden;
wobei das erste und das zweite Reservoir innerhalb einer einzigen Kammer/Kartusche (160) liegen;
wobei die mindestens eine Durchflusseluentenerzeugungszone konfiguriert ist, um an ein Chromatographiesystem angeschlossen zu sein;
wobei ein Druck, der in der mindestens einen Durchflusseluentenerzeugungszone aufrechterhalten wird, von 69 bis 345 bar (1.000 bis 5.000 psi) beträgt, und ein Druck, der in dem ersten und dem zweiten Reservoir aufrechterhalten wird, bei Atmosphärendruck ist; und
wobei jeder Ionenaustauschverbinder aus einer Membran besteht, die eine Dicke von 1 bis 3 mm aufweist.

2. Erzeugungssystem nach Anspruch 1, wobei entweder die erste Elektrode geerdet ist; oder die zweite und die dritte Elektrode geerdet sind.

3. Erzeugungssystem nach Anspruch 1 oder 2, ferner umfassend eine Pumpe und/oder einen Entgaser.

4. Erzeugungssystem nach einem der vorstehenden Ansprüche, ferner umfassend einen elektrolytischen pH-Modifikator in Fluidkommunikation mit dem Auslass der Eluentenerzeugungszone, der pH-Modifikator umfassend einen pH-Modifikatorflusskanal, eine pH-Modifikatorbarriere, die an den pH-Modifikatorflusskanal angrenzt, die den Flüssigkeitsfluss im Wesentlichen verhindert und Ionen nur einer Ladung transportiert, und eine erste und eine zweite beabstandete Elektrode, die auf gegenüberliegenden Seiten der pH-Modifikatorbarriere angeordnet sind.

5. Erzeugungssystem nach einem der vorstehenden Ansprüche, ferner umfassend:
(h) eine Quelle eines ersten lonenelektrolyten in Fluidkommunikation mit dem ersten Ionenaustauschverbinder (180a); und
(i) eine Quelle eines zweiten lonenelektrolyten in Fluidkommunikation mit dem zweiten Ionenaustauschverbinder (180b), wobei die zweiten Ionen eine entgegengesetzte Ladung zu den ersten Ionen haben; und/oder
(j) eine Quelle für entionisiertes Wasser in Fluidkommunikation mit dem Einlass der Eluentenerzeugungszone.

6. Erzeugungssystem nach Anspruch 5, wobei die Quelle des ersten lonenelektrolyten eine wässrige Anionenelektrolytlösung ist und die Quelle des zweiten lonenelektrolyten eine wässrige Kationenelektrolytlösung ist.

7. Erzeugungssystem nach Anspruch 5, wobei die Quelle des ersten lonenelektrolyten eine wässrige Kationenelektrolytlösung ist und die Quelle des zweiten lonenelektrolyten eine wässrige Anionenelektrolytlösung ist.

8. Erzeugungssystem nach Anspruch 6 oder 7, wobei die wässrige Anionenelektrolytlösung Methansulfonatelektrolyt ist und die wässrige Kationenelektrolytlösung Kaliumelektrolyt ist.

9. Erzeugungssystem nach einem der vorstehenden Ansprüche, wobei mindestens eine der ersten, der zweiten oder der dritten Elektrode Platin umfasst.

10. Verfahren zum Erzeugen einer Salzlösung für Flüssigkeitschromatographie unter Verwendung eines elektrolytischen Eluentenerzeugungssystems, umfassend mindestens eine Durchflusseluentenerzeugungszone (110), umfassend einen Einlass (110a) und einen Auslass (110b) und eine erste Elektrode (120); ein erstes Reservoir (140a), umfassend eine zweite Elektrode (150a) und eine Quelle des ersten lonenelektrolyten; ein zweites Reservoir (140b), umfassend eine dritte Elektrode (150b) und eine Quelle des zweiten lonenelektrolyten; einen ersten Ionenaustauschverbinder (180a), der zwischen der ersten Ionenquelle und der Eluentenerzeugungszone angeordnet ist, wobei der Verbinder den Flüssigkeitsfluss durch den Ionenaustauschverbinder im Wesentlichen verhindert und Ionen nur mit der gleichen Ladung wie die ersten Ionen transportiert; einen zweiten Ionenaustauschverbinder (180b), der zwischen der zweiten Ionenquelle und der Eluentenerzeugungszone angeordnet ist, wobei der Verbinder den Flüssigkeitsfluss durch den Ionenaustauschverbinder im Wesentlichen verhindert und nur Ionen mit der gleichen Ladung wie die zweiten Ionen transportiert, wobei der zweite Ionenaustauschverbinder eine entgegengesetzte Ladung zu dem ersten Ionenaustauschverbinder hat, wobei der erste und der zweite Ionenaustauschverbinder in Fluidkommunikation mit dem eluentenerzeugenden Kanal stehen, wobei es Ionen ermöglicht wird, durch die Ionenaustauschverbinder zu treten, um sich zu mischen und eine salzhaltige Lösung zu bilden, die zur Verwendung als ein Eluent für Flüssigkeitschromatographie geeignet ist; eine erste Stromquelle, die konfiguriert ist, um mit der ersten (120) und der zweiten Elektrode (150a) verbunden zu werden; und eine zweite Stromquelle, die konfiguriert ist, um mit der ersten (120) und der dritten Elektrode (150b) verbunden zu werden, wobei das Verfahren die Schritte umfasst:
(a) Fließenlassen einer Quelle von entionisiertem Wasser in die mindestens eine Durchflusseluentenerzeugungszone;
(b) Leiten eines ersten Stroms zwischen der ersten und der zweiten Elektrode, um zu bewirken, dass Ionen durch den ersten Ionenaustauschverbinder treten, wobei der erste Strom die Menge an Ionen steuert, die in die oder aus der mindestens einen Durchflusseluentenerzeugungszone transportiert werden; und
(c) Leiten eines zweiten Stroms zwischen der ersten und der dritten Elektrode, um zu bewirken, dass Ionen durch den zweiten Ionenaustauschverbinder treten, wobei der zweite Strom die Menge an Ionen steuert, die in die oder aus der mindestens einen Durchflusseluentenerzeugungszone transportiert werden, wodurch eine salzhaltige Lösung, die zur Verwendung als ein Eluent für die Flüssigkeitschromatographie geeignet ist, in der Eluentenerzeugungszone gebildet wird;
wobei das erste und das zweite Reservoir innerhalb einer einzigen Kammer/Kartusche (160) liegen;
wobei die mindestens eine Durchflusseluentenerzeugungszone konfiguriert ist, um an ein Chromatographiesystem angeschlossen zu sein;
wobei ein Druck, der in der mindestens einen Durchflusseluentenerzeugungszone aufrechterhalten wird, von 69 bis 345 bar (1.000 bis 5.000 psi) beträgt, und ein Druck, der in dem ersten und dem zweiten Reservoir aufrechterhalten wird, bei Atmosphärendruck ist; und
wobei jeder Ionenaustauschverbinder aus einer Membran besteht, die eine Dicke von 1 bis 3 mm aufweist.

11. Verfahren nach Anspruch 10, wobei die Quelle des ersten lonenelektrolyten eine wässrige Anionenelektrolytlösung ist und die Quelle des zweiten lonenelektrolyten eine wässrige Kationenelektrolytlösung ist.

12. Verfahren nach Anspruch 10 oder 11, wobei die wässrige Anionenelektrolytlösung Methansulfonatelektrolyt ist und die wässrige Kationenelektrolytlösung Kaliumelektrolyt ist.

13. Verfahren nach einem der Ansprüche 10 bis 12, wobei mindestens eine der ersten, der zweiten oder der dritten Elektrode Platin umfasst.

14. Verfahren nach einem der Ansprüche 10 bis 13, wobei eine Differenz zwischen dem ersten Strom und dem zweiten Strom eine Menge an erzeugtem H⁺ oder OH⁻ bestimmt.

15. Verfahren nach einem der Ansprüche 10 bis 14, wobei entweder die erste Elektrode geerdet ist; oder die zweite und die dritte Elektrode geerdet sind.

## Revendications

1. Système de générateur d'éluant électrolytique (100), dans lequel le système de générateur comprend :
(a) au moins une zone de génération d'éluant à écoulement continu (110) comprenant une entrée (110a) et une sortie (110b) et une première électrode (120),
(b) un premier réservoir (140a) comprenant une deuxième électrode (150a) et conçu pour contenir une première source d'ions ;
(c) un second réservoir (140b) comprenant une troisième électrode (150b) et conçu pour contenir une seconde source d'ions ;
(d) un premier connecteur d'échange d'ions (180a) disposé entre le premier réservoir et la zone de génération d'éluant, dans lequel le connecteur empêche sensiblement l'écoulement de liquide à travers le connecteur d'échange d'ions et ne transporte que des ions de la même charge que lesdits premiers ions ;
(e) un second connecteur d'échange d'ions (180b) disposé entre le second réservoir et la zone de génération d'éluant, dans lequel le connecteur empêche sensiblement l'écoulement de liquide à travers le connecteur d'échange d'ions et ne transporte que des ions de la même charge que lesdits seconds ions, dans lequel le second connecteur d'échange d'ions est d'une charge opposée au premier connecteur d'échange d'ions, moyennant quoi les premier et second connecteurs d'échange d'ions sont en communication avec le canal de génération d'éluant, permettant à des ions de passer à travers les connecteurs d'échange d'ions pour se mélanger et former une solution contenant du sel appropriée pour une utilisation en tant qu'éluant pour une chromatographie liquide ;
(f) une première source de courant configurée pour être connectée auxdites première (120) et deuxième électrodes (150a) ; et
(g) une seconde source de courant configurée pour être connectée auxdites première (120) et troisième électrodes (150b) ;
dans lequel les premier et second réservoirs sont à l'intérieur d'une seule chambre/cartouche (160) ;
dans lequel l'au moins une zone de génération d'éluant à écoulement continu est configurée pour être en ligne avec un système de chromatographie ;
dans lequel une pression maintenue dans l'au moins une zone de génération d'éluant à écoulement continu est comprise entre 69 et 345 bars (1 000 et 5 000 psi), et une pression maintenue dans les premier et second réservoirs est à la pression atmosphérique ; et
dans lequel chaque connecteur d'échange d'ions est constitué d'une membrane ayant une épaisseur de 1 à 3 mm.

2. Système de générateur selon la revendication 1, dans lequel soit la première électrode est mise à la terre ; soit les deuxième et troisième électrodes sont mises à la terre.

3. Système de générateur selon la revendication 1 ou 2, comprenant en outre une pompe et/ou un dégazeur.

4. Système de générateur selon l'une quelconque des revendications précédentes, comprenant en outre un modificateur de pH électrolytique en communication fluidique avec la sortie de la zone de génération d'éluant, ledit modificateur de pH comprenant un canal d'écoulement de modificateur de pH, une barrière de modificateur de pH adjacente audit canal d'écoulement de modificateur de pH empêchant sensiblement l'écoulement de liquide et transportant des ions d'une charge uniquement et des première et deuxième électrodes espacées disposées sur des côtés opposés de ladite barrière de modificateur de pH.

5. Système de générateur selon l'une quelconque des revendications précédentes, comprenant en outre :
(h) une source de premier électrolyte ionique en communication fluidique avec le premier connecteur d'échange d'ions (180a) ; et
(i) une source de second électrolyte ionique en communication fluidique avec le second connecteur d'échange d'ions (180b), dans lequel les seconds ions sont de charge opposée auxdits premiers ions ; et/ou
(j) une source d'eau désionisée en communication fluidique avec l'entrée de la zone de génération d'éluant.

6. Système de générateur selon la revendication 5, dans lequel la source du premier électrolyte ionique est une solution aqueuse d'électrolyte anionique et la source du second électrolyte ionique est une solution aqueuse d'électrolyte cationique.

7. Système de générateur selon la revendication 5, dans lequel la source du premier électrolyte ionique est une solution aqueuse d'électrolyte cationique et la source du second électrolyte ionique est une solution aqueuse d'électrolyte anionique.

8. Système de générateur selon la revendication 6 ou 7, dans lequel la solution aqueuse d'électrolyte anionique est un électrolyte de méthanesulfonate et la solution aqueuse d'électrolyte cationique est un électrolyte de potassium.

9. Système de générateur selon l'une quelconque des revendications précédentes, dans lequel au moins l'une des première, deuxième ou troisième électrodes comprend du platine.

10. Procédé de génération d'une solution saline pour chromatographie liquide à l'aide d'un système de générateur d'éluant électrolytique comprenant au moins une zone de génération d'éluant à écoulement continu (110) comprenant une entrée (110a) et une sortie (110b) et une première électrode (120) ; un premier réservoir (140a) comprenant une deuxième électrode (150a) et une source de premier électrolyte ionique ; un second réservoir (140b) comprenant une troisième électrode (150b) et une source de second électrolyte d'ions ; un premier connecteur d'échange d'ions (180a) disposé entre la première source d'ions et la zone de génération d'éluant, dans lequel le connecteur empêche sensiblement un écoulement de liquide à travers le connecteur d'échange d'ions et ne transporte que des ions de la même charge que lesdits premiers ions ; un second connecteur d'échange d'ions (180b) disposé entre la seconde source d'ions et la zone de génération d'éluant, dans lequel le connecteur empêche sensiblement l'écoulement de liquide à travers le connecteur d'échange d'ions et ne transporte que des ions de la même charge que lesdits seconds ions, dans lequel le second connecteur d'échange d'ions est d'une charge opposée au premier connecteur d'échange d'ions, moyennant quoi les premier et second connecteurs d'échange d'ions sont en communication fluidique avec le canal de génération d'éluant, permettant aux ions de passer à travers les connecteurs d'échange d'ions pour se mélanger et former une solution contenant du sel appropriée pour une utilisation en tant qu'éluant pour une chromatographie liquide ; une première source de courant configurée pour être connectée auxdites première (120) et deuxième électrodes (150a); et une seconde source de courant configurée pour être connectée auxdites première (120) et troisième électrodes (150b), dans lequel le procédé comprend les étapes consistant à :
a) écouler une source d'eau désionisée dans l'au moins une zone de génération d'éluant à écoulement continu ;
(b) passer un premier courant entre les première et deuxième électrodes pour faire passer des ions à travers le premier connecteur d'échange d'ions, dans lequel le premier courant commande la quantité d'ions transportés dans ou depuis l'au moins une zone de génération d'éluant à écoulement continu ; et
(c) passer un second courant entre les première et troisième électrodes pour faire passer des ions à travers le second connecteur d'échange d'ions, dans lequel le second courant commande la quantité d'ions transportés dans ou depuis l'au moins une zone de génération d'éluant à écoulement continu, moyennant quoi une solution contenant du sel utilisable comme éluant pour une chromatographie liquide est formée dans la zone de génération d'éluant ;
dans lequel les premier et second réservoirs sont à l'intérieur d'une seule chambre/cartouche (160) ;
dans lequel l'au moins une zone de génération d'éluant à écoulement continu est configurée pour être en ligne avec un système de chromatographie ;
dans lequel une pression maintenue dans l'au moins une zone de génération d'éluant à écoulement continu est comprise entre 69 et 345 bars (1 000 et 5 000 psi), et une pression maintenue dans les premier et second réservoirs est à la pression atmosphérique ; et
dans lequel chaque connecteur d'échange d'ions est constitué d'une membrane ayant une épaisseur de 1 à 3 mm.

11. Procédé selon la revendication 10, dans lequel la source du premier électrolyte ionique est une solution aqueuse d'électrolyte anionique et la source du second électrolyte ionique est une solution aqueuse d'électrolyte cationique.

12. Procédé selon la revendication 10 ou 11, dans lequel la solution aqueuse d'électrolyte anionique est un électrolyte de méthanesulfonate et la solution aqueuse d'électrolyte cationique est un électrolyte de potassium.

13. Procédé selon l'une quelconque des revendications 10 à 12, dans lequel au moins l'une des première, deuxième ou troisième électrodes comprend du platine.

14. Procédé selon l'une quelconque des revendications 10 à 13, dans lequel une différence entre le premier courant et le second courant détermine une quantité de H⁺ ou de OH⁻ générée.

15. Procédé selon l'une quelconque des revendications 10 à 14, dans lequel soit la première électrode est mise à la terre ; soit les deuxième et troisième électrodes sont mises à la terre.
